# EUROPÄISCHE PATENTSCHRIFT

(11) **EP 1 619 975 B1**
(45) Veröffentlichungstag und Bekanntmachung des Hinweises auf die Patenterteilung: **15.08.2007**
(21) Anmeldenummer: 03799436.5
(22) Anmeldetag: 22.12.2003
(51) Int. Cl.: A44B 11/26, H01R 13/627, B66C 1/34

(54) **TRENNSCHLOSS MIT EINER AUSLÖSE-EINRICHTUNG**
SEPARATING LOCK COMPRISING A TRIGGERING DEVICE
FERMETURE SEPARABLE COMPORTANT UN DISPOSITIF DE DECLENCHEMENT

(30) Priorität: 20.01.2003 DE 10302227
(43) Veröffentlichungstag der Anmeldung: 01.02.2006
(73) Patentinhaber: EADS Deutschland GmbH, 85521 Ottobrunn (DE); Paratec GmbH, 66798 Wallerfangen (DE)
(72) Erfinder: ERTLER, Stefan, F-57320 Oberdorff (FR)
(86) Internationale Anmeldenummer: PCT/DE2003/004245
(87) Internationale Veröffentlichungsnummer: WO 2004/066773

(56) Entgegenhaltungen:
- EP-A- 1 052 735
- WO-A-02/084810
- US-A- 2 522 790
- US-A- 5 580 113
- US-A- 6 138 330
- US-A1- 2002 067 955

## Beschreibung

Die Erfindung betrifft ein Trennschloß mit einer Auslöse-Einrichtung insbesondere für angehängte Lasten. Die Erfindung betrifft insbesondere ein Trennschloss zum Zusammenhalten zweier Teile einer Anordnung aufgrund einer Selbstsicherung aufgrund äußerer Kräfte und zur Freigabe der Teile bei Auftreten vorbestimmter Änderungen der äußeren Kräfte.

Die Erfindung betrifft weiterhin ein Trennschloss zum Zusammenhalten zweier Teile einer Anordnung aus einem mit dem ersten der Teile verbundenen Schirm und einer von diesem getragenen, mit dem zweiten der Teile verbundenen Last und zur Freigabe der Teile.

Das erfindungsgemäße Trennschloß kann insbesondere für Luftfahrtgeräte wie z.B. Flugzeuge, Fall- oder Gleitschirme, Drehflügler oder Ballone zur Trennung einer Last verwendet werden, um eine Last von dem Luftfahrtgerät zu trennen, an dem jene angehängt ist. Bei der Verwendung für einen Fallschirm oder Gleitschirm kann das Trennschloß eingesetzt werden, um bei einem vorbestimmten Ereignis, wie z.B. die Bodenberührung der Last, die Last von dem Fall- bzw. Gleitschirm zu trennen und somit umgekehrt den Schirm von der Last zu entfernen, so dass Windkräfte über den Schirm keinen Einfluß mehr auf die Last haben können.

Aus dem allgemeinen Stand der Technik (z.B. Dokument WO02/084810) sind Ver- und Entriegelungs-Einrichtungen oder Schlösser zur Anordnung zwischen einem Fallschirm und einer von diesem getragenen Last bekannt, welche entweder mittels pyrotechnischen Mitteln oder über eine Hydraulik zeitverzögert die Trennung der Last vornimmt.

Diese Anordnungen haben den Nachteil, dass diese wartungsintensiv sind. Außerdem ist im Betrieb derselben die Zuführung von Fremdenergie erforderlich.

Ein weiterer Nachteil der bekannten Schlösser ist, dass diese zeitverzögert auslösen. Bei einer Nutzung durch Fallschirmspringer oder bei Lastenabsetzverfahren aus Luftfahrzeugen mittels Fallschirmen wird die Last nicht sofort bei Bodenberührung getrennt, so dass die Gefahr besteht, dass aufgrund an dem Schirm angreifenden Luftkräfte ein Schleifen derLast am Boden mit entsprechenden Beschädigungen an derselben oder zu Verletzungen des Springers entstehen können.

Es ist die Aufgabe der Erfindung, ein Trennschloß bereit zu stellen, das möglichst einfach und robust gebaut ist und mit dem zuverlässig auf ein vorbestimmtes Ereignis eine Last von einem Luftfahrtgerät trennbar ist.

Diese Aufgabe wird mit den Merkmalen der unabhängigen Patentansprüche gelöst. Weitere Ausführungsformen sind in den auf diese rückbezogenen Unteransprüchen angegeben.

Bei einer Anwendung der Erfindung Fall- oder Gleitschirme besteht die Möglichkeit, die Last sofort bei Bodenberührung vom Schirm zu trennen und somit die Landebewegung nach vorne oder in Flugrichtung in Bodennäheabrupt beendet wird.

Erfindungsgemäß wird durch einen rein mechanischen Verschluss, welcher mittels der Schwerkraft, die auf jede Mase wirkt zustandekommt, eine selbstständige und bei Bodenberührung sofortige Trennung der Last vom Luftfahrtgerät herbeizuführen.

Erfindungsgemäß ist ein Trennschloss zum Zusammenhalten zweier Teile einer Anordnung aufgrund einer Selbstsicherung aufgrund äußerer Kräfte und zur Freigabe der Teile bei Auftreten vorbestimmter Änderungen der äußeren Kräfte vorgesehen, bei dem im zweiten Teil ein mit einem Steuerelement des ersten Teils und mit einer Einrast-Vorrichtung des zweiten Teils zusammenwirkendes Verriegelungselement angeordnet ist, das mittels einer Vorspann-Einrichtung von einer Verriegelungs- in eine Entriegelungsstellung beweglich ist, und bei dem das Steuerelement mittels einer Vorspann-Einrichtung von einer Verriegelungs- in eine Entriegelungsstellung beweglich ist und ein Anlageelement aufweist, das mit einem ersten Anlageelement des Verriegelungselementes derart zusammenwirkt, dass in der Verriegelungsstellung das Verriegelungselement über die Einrast-Vorrichtung mit dem ersten Teil in Eingriff gehalten und in der Entriegelungsstellung das Verriegelungselement aus der Einrast-Vorrichtung herausbewegt wird, um den ersten Teil vom zweiten Teil zu lösen.

Weiterhin ist erfindungsgemäss ein Trennschloss zum Zusammenhalten zweier Teile einer Anordnung aus einem mit dem ersten der Teile verbundenen Schirm und einer von diesem getragenen, mit dem zweiten der Teile verbundenen Last und zur Freigabe der Teile vorgesehen, bei dem im zweiten Teil ein mit einem Steuerelement des ersten Teils und mit einer Einrast-Vorrichtung des zweiten Teils zusammenwirkendes Verriegelungselement angeordnet ist, das mittels einer Vorspann-Einrichtung von einer Verriegelungs- in eine Entriegelungsstellung beweglich ist, und bei dem das Steuerelement mittels einer Vorspann-Einrichtung von einer Verriegelungs- in eine Entriegelungsstellung beweglich ist und ein Anlageelement aufweist, das mit einem ersten Anlageelement des Verriegelungselementes derart zusammenwirkt, dass in der Verriegelungsstellung das Verriegelungselement über die Einrast-Vorrichtung mit dem ersten Teil in Eingriff gehalten und in der Entriegelungsstellung das Verriegelungselement aus der Einrast-Vorrichtung herausbewegt wird, um den ersten Teil vom zweiten Teil zu lösen, so dass das Zusammenhalten der beiden Teile durch das Auftreten der äußeren Kräfte aufgrund einer Selbstsicherung und das Lösen derselben bei Auftreten einer Reduktion der von der Last ausgeübten Gewichtskraft erfolgt.

Zur weiteren Erläuterung der Erfindung wird im folgenden auf die Figuren der Zeichnung Bezug genommen, die zeigen:
- Figur 1 eine Draufsicht auf eine Ausführungsform eines für einen Gleit- oder Fallschirm vorgesehenes erfindungsgemässen Trennschlosses, bei der innerhalb des Gehäuses angeordnete Bauteile gestrichelt eingezeichnet sind;
- Figur 2 eine Seitenansicht der Ausführungsform des erfindungsgemässen Trennschlosses nach der Figur 1, bei der innerhalb des Gehäuses angeordnete Bauteile gestrichelt eingezeichnet sind;
- Figur 3 eine weitere Seitenansicht der Ausführungsform des erfindungsgemässen Trennschlosses nach der Figur 1, bei der innerhalb des Gehäuses angeordnete Bauteile gestrichelt eingezeichnet sind;
- Figur 4 eine perspektivische Ansicht der Ausführungsform des erfindungsgemässen Trennschlosses nach der Figur 1;
- Figur 5 einen Schnitt durch eine weitere Ausführungsform eines für einen Gleit- oder Fallschirm vorgesehenen Trennschlosses im Sicherungszustand, wobei der Sicherungs-Clip eingeschoben ist;
- Figur 6 das Trennschloss nach der Figur 5 in der dort verwendeten Schnittdarstellung, wobei sich das Trennschloss im Sicherungszustand befindet und der Sicherungs-Clip entfernt ist;
- Figur 7 das Trennschloss nach der Figur 5 in der dort verwendeten Schnittdarstellung, wobei dasselbe durch Reduktion der Gewichtskraft entriegelt ist und beide Teile des Schlosses noch zusammengefügt sind;
- Figur 8 das Trennschloss nach der Figur 5 in der dort verwendeten Schnittdarstellung, wobei dasselbe durch Reduktion der Gewichtskraft entriegelt ist und sich die beiden Teile des Schlosses voneinander entfernt haben.

Das erfindungsgemäße Trennschloss kann für jegliche Verwendung vorgesehen sein, bei der über eine äußere Vorspannkraft zwei Teile des Trennschlosses in einem selbstsichernden Verriegelungszustand gehalten wird. Bei der Anwendung der Erfindung auf ein System aus einem Gleitfallschirm oder Lastenschirm und einer Last wird die Vorspannkraft durch die Gewichtskraft der Last aufgebracht.

Das Trennschloss 1 ist aus einem ersten Teil T1 und einem zweiten Teil T2 gebildet, die im Sicherungs- oder selbstgesicherten Zustand aneinander gefügt sind. Der zweite Teil T2 ist derjeinige Teil, an dem die Vorspannkraft angreift, mit der das Trennschloss in seinem selbstsichernden Zustand gehalten wird. Vorzugsweise steht mit dem zweiten Teil eine Last oder ein Gewicht in Verbindung, so dass die Vorspannkraft durch eine Gewichtskraft aufgebracht wird.

Im folgenden wird die Erfindung in der Anwendung auf eine Anordnung aus einem Lasten- oder Gleitschirm, kurz Schirm gennannt, und einer Last beschrieben, wobei der Schirm mit dem ersten Teil T1 und die Last mit dem zweiten Teil T2 in Verbindung steht.

Der zweite oder lastseitige Teil T2 weist zwei Verriegelungselemente in Form von Verriegelungsarmen 2a, 2b auf, die über Gelenke 3a bzw. 3b gelenkig gelagert sind und mit einem längsverschieblichen Steuer- oder Lastaufnahme-Element 43 zusammenwirken. Die Verriegelungsarme 2a, 2b sind mittels Vorspannelementen in Form von Federelementen 5a bzw. 5b gegen das Steuerelement 4 vorgespannt. Ebenso ist das Steuerelement mittels Vorspannelementen in Form von Federelementen 6a bzw. 6b gegen das Steuerelement 4 vorgespannt. Die Vorspannelemente 5a, 5b, 6a, 6b können in beliebiger Weise nach dem Stand der Technik gebildet sein, wobei die Anzahl der verwendeten Vorspannelemente vom Anwendungsfall abhängt. Vorzugsweise ist eine Führung 8 für das Steuerelement 4 im zweiten Teil T2 vorgesehen.

Die Verriegelungsarme 2a, 2b weisen ein erstes Anlageelement 11a bzw. 11 b auf, die in der Verriegelungsstellung an einem Anlageelement 12 des Steuerelementes 4 anliegen. Ferner weisen die Verriegelungsarme 2a, 2b ein zweites Anlageelement 13a bzw. 13b auf, die in der Verriegelungsstellung von einer Einrastvorrichtung 14a bzw. 14b gehalten werden.

Das Steuerelement 4 ragt auf derjenigen Seite ein stückweit aus dem zweiten Teil T2 heraus, die der Seite, auf der der erste Teil T1 aufgesetzt werden kann, gegenüber liegt. An diesem aus dem zweiten Teil T2 herausragenden Teil ist ein Anschlußelement 7 vorgesehen, das Teil des Steuerelemnentes 4 ist oder mit diesem in Verbindung steht.

Die Verriegelungsarme 2a, 2b und insbesondere die zweiten Anlageelemente 13a bzw. 13b ragen in den ersten Teil T1 des Trennschlosses 1 hinein, wenn dieses am ersten Teil T1 im Sicherungszustand anliegt. Die Einrastvorrichtung 14a bzw. 14b ist deshalb im zur zumindest teilweisen Aufnahme des zweiten Anlageelements 13a bzw. 13b ist im ersten Teil 1 angeordnet, so dass über die Verriegelungs-Elemente 2a bzw. 2b der erste T1 und der zweite T2 Teil zusammengehalten werden können.

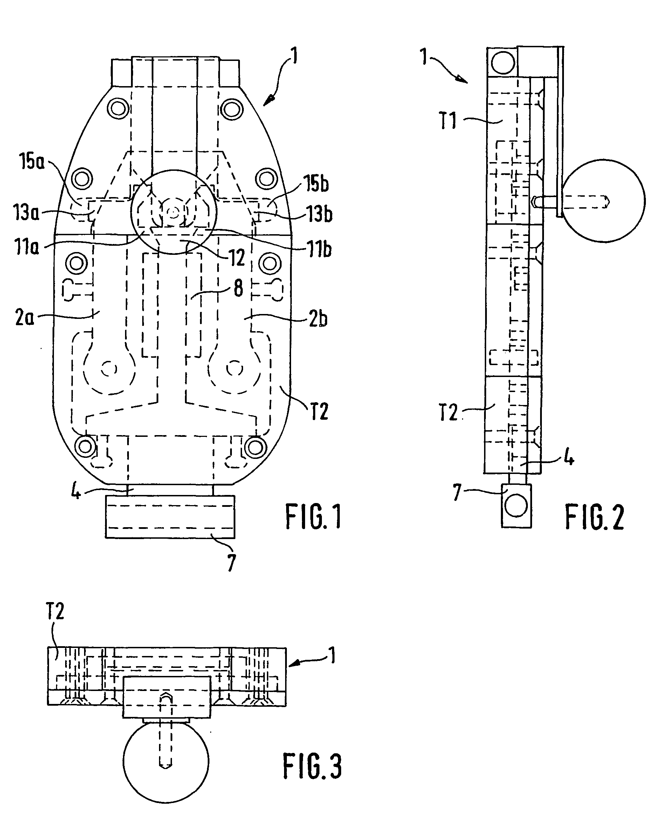

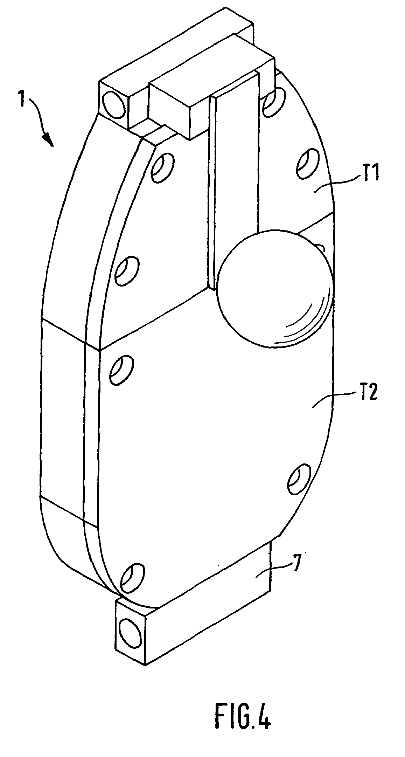

In der Ausführungsform nach den Figuren 1 bis 8 ist die Einrast-Vorrichtung 14a, 14b aus einer Aussparung 15a bzw. 15b im ersten Teil T1 und einer Anlagefläche 16a bzw. 16b gebildet, die auf der dem zweiten Teil T2 zugewandten Seite der Aussparung gelegen und deren Außenseite entgegengesetzt zur Lage des zweiten Teils T2 gerichtet ist, um die auf den ersten Teil T1 zu übertragenden Verriegelungskräfte im Sicherungszustand aufzunehmen.

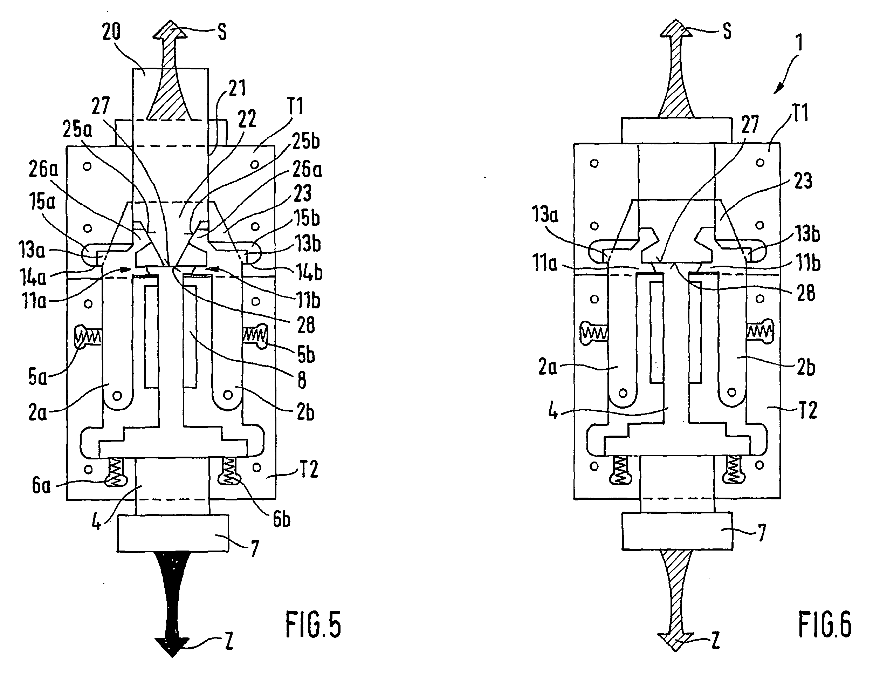

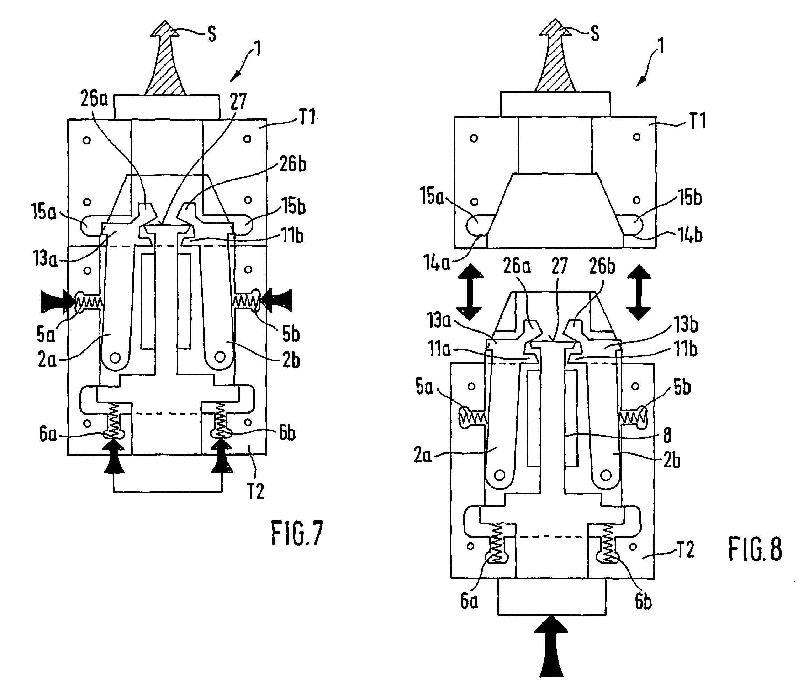

Die Verriegelungsarme 2a, 2b sind von einer Verriegelungsstellung (Figuren 5, 6) aus in Richtung zum Steuerelement 4 hin in eine Entriegelungsposition (Figuren 7, 8) drehbar gelagert. Das Anlageelement 12 des Steuerelementes 4 hält durch das Zusammenwirken mit den zweiten Anlagelementen 13a, 13b der Verriegelungsarme 2a, 2b diese entgegen die Vorspannkräfte der Vorspannelemente 5a bzw. 5b in ihrer Verriegelungsstellung, wenn das Steuerelement entgegen die Vorspannkraft des zumindest einen, auf das Steuerelement wirkenden Vorspannelementes 6a, 6b in ihrer ersten oder Verriegelungs-Stellung gehalten wird. Dies geschieht durch eine äußere Kraft. Das zumindest eine Vorspannelement ist derart dimensioniert, dass dieses durch die Reduktion der äußeren Kraft aufgrund eines äußeren Ereignisses das Steuerelement 4 in eine Entriegelungsposition verschiebt. Das Anlageelement 12 des Steuerelementes 4 wiederum ist derart gebildet, dass es die Verriegelungselemente 2a, 2b für eine Bewegung in Richtung zum Steuerelement 4 in eine Entriegelungsstellung freigegeben werden, die durch die diesen zugeordneten Vorspannelementen 5a bzw. 5b bewirkt wird. Bei dieser Bewegung werden die zweiten Anlageelemente 13a bzw. 13b aus der Einrast-Vorrichtung 14a herausgefahren, in der der erste Teil T1 am zweiten Teil T2 gehalten wird. Durch dieses Herausfahren der zweiten Anlageelemente 13a bzw. 13b wird der erste Teil T1 vom zweiten Teil T2 gelöst.

Ein Sicherungsschlüssel oder Sicherungsclip 20 kann vorgesehen sein, mit dem sich das Trennschloss 1 in seinen Sicherungszustand (Figuren 5, 6) bringen läßt. In der dargestellten Ausführungsformen ist ein Führungselement 22 desselben durch einen Einlaß oder einen Kanal 21 in einen wirkbereich oder Raum 23 einführbar, in dem im Sicherungszustand das erste 11a bzw. 11 b und zweite 13a bzw. 13b Anlageelement gelegen sind. Durch Einführen des Sicherungsschlüssels oder Sicherungsclips 20 drückt das Führungselement 22 die Verriegelungselemente 2a, 2b und das Steuerelement 4 gleichzeitig jeweils entgegen die jeweiligen Vorspannelemente 5a, 5b bzw. 6a, 6b in ihre Verriegelungspostionen, wenn das erste Teil T1 auf dem ersten Teil T2 aufgesetzt ist. Dadurch wird das Anschlußelement 7 des Steuerelements 4 weiter aus dem zwieten Teil T2 heruasgeschoben. Zu diesem Zweck weist der Sicherungsschlüssel 20 erste Anlageflächen 25a, 25b auf, die mit dritten Anlageelementen 26a bzw. 26b der Verriegelungselemente 2a bzw. 2b zusammenwirken, sowie eine zweite Anlagefläche 27 auf, die mit einer Anlagefläche 28 des Steuerelementes 4 zusammenwirkt. Somit wird durch ein formschlüssiges Zusammenwirken des Sicherungsschlüssels 20 mit den Verriegelungselementen 2a, 2b und zeitgleich mit dem Steuerelement 43 das Trennschloss 1 in den Sicherungszustand gebracht.

Bei der Anwendung der Erfindung auf ein Lastenschirm-System steht der erste Teil T1 des Trennschlosses 1 mit dem Schirm und dessen zweiter Teil T2 über das Anschlußelement 7 mit der Last in Verbindung. Vorzugsweise vor dem Absetzen oder dem Flug wird das Trennschloss 1 mittels des Sicherungsschlüssels 20 in seinen Sicherungszustand gebracht. Übt die Last selbst auf das Anschlußelement 7 eine von dem Teil T23 weggerichtete Zugkraft aus oder wird diese auf andere Weise bewirkt, wird der Sicherungsschlüssel 20 manuell oder automatisch entfernt, d.h. aus dem ersten Teil T1 herausgezogen. Das Trennschloss wird aufgrund der vom Anschlußelement 7 auf das Steuerelement 4 übertragenen Zugkraft in seinem gesicherten Zustand gehalten. Dieser Zustand ist selbstsichernd, da die zweiten Anlageelemente 13a, 13b mittels des Anlagelementes 12 des Steuerelementes 4 in den Einrast-Vorrichtungen 14a bzw. 14b gehalten werden. Befindet sich die Last freichwebend unterlag des Luftfahrtgerätes, so dass die Schwerkraft auf die Last wirkt, oder wird die Last mit dem Schirm aus einem Luftfahrtgerät ausgezogen doer abgesetzt, so dass Luftkräfte oder aus diesen resultierenden Schrimkräfte S auf das Trennschloss wirken, wird das Steuerelement 4 in seiner Verriegelungsposition entgegen die Vorspannkraft des diesem zugeordneten Vorspannelementes 6a, 6b gehalten. Dadurch werden die Verriegelungsarme in einer Position gehalten, in der deren zweite Anlagelemente 13a, 13b mit den Einrast-Vorichtungen 14a, 14b zusammenwirken und den ersten Teil T1 am zweiten Teil T2 halten. Während des Fluges der Anordnung von mit dem Trennschloss zusammengehaltenen Last und Schirm bewirkt die Schwerkraft der Last die Aufrechterhaltung des Sicherungszustandes.

Durch Reduktion der auf das Steuerelement 4 wirkenden Zugkraft Z z.B. durch das Auftreffen der Last im Gelände oder auf dem Boden, wird der Entriegelungsvorgang eingeleitet. Bei einer dadurch auftretenden ausreichenden Reduktion dieser Zugkraft wird unter der Wirkung der Vorspannkraft des zumindest einen dem Steuerelement 4 zugeordneten Vorspannelementes 6a, 6b das Steuerelement 4 in seine Entriegelungsposition bewegt und dessen Anlageelement 12 in eine Position gebracht, in der die Verriegelungselemente 2a, 2b für eine Bewegung aus der Einrast-Vorrichtung heraus freigegeben werden. Durch diese Bewegung wird auch der erste Teil T1 vom zweiten Teil T2 gelöst und unter dem Einfluß der auf den Schirm wirkenden Luftkräfte gelöst.

Das erfindungsgemässe Trennschloss 1 kann auch durch im Vergleich zu den in den Figuren 1 bis 8 dargestellten Ausführungsformen alternative Ausführungsformen gebildet sein, solange die beschriebene Fnktionweise erhalten bleibt.

Dementsprechend kann anstelle der gemäss der Figuren 1 bis 8 vorgesehenen zwei Verriegelungselemente 2a, 2b auch nur ein Verriegelungselement vorgesehen sein, das mit einem Steuerelement zusammenwirkt. Die Anzahl der Vorspannelemente für die Verriegelungselemente 2a, 2b wie auch für das Steuerelement 4 kann dem jeweiligen Anwendungsfall angepaßt sein. So kann einem Verriegelungselement 2a, 2b mehr als ein Vorspannelement zugeordnet sein.

Das in den Figruenn 1 bis 8 längsverschiebliche Steuerelement 4 kann alternativ auch drehbar gelagert sein, so dass eine entsprechende Reduktion der auf das Anschlußelement 7 ausgeübten Zugkraft unter der Wirkung entsprechender Vorspannelemente eine Drehung des Steurelements bewirkt wird, durch die Verrieglungsarm aus einer Verriegelungs- oder Einrast-Position freigegeben und mittels Vorspann-Elemente herausbewegt wird.

Auch kann der zumindest eine Verriegelungsarm verschieblich im zweiten Teil T2 gelagert und geführt sein. Auch bei dieser Ausführungsform ist eine entsprechende Vorspann-Einrichtung 5a, 5b sowie ein erstes, ein zweites und ein drittes Anlageleement mit den beschriebenen Funktionen vorzugsehen.

Das erste und das dritte Anlageelement jedes Verriegelungselementes kann auch als eine einheitliche Fläche ausgebildet sein.

Die Erfindung ist anwendbar auf jede Anordnung aus zumindest zwei Teilen, die bei Einwirkung äußerer Kräfte in selbstsichernder Weise zusammengehalten und bei Auftreten vorbestimmter Änderungen der äußeren Kräfte gelöst werden sollen.

## Patentansprüche

1. Trennschloss zum Zusammenhalten zweier Teile (T1, T2) einer Anordnung aufgrund einer Selbstsicherung aufgrund äußerer Kräfte und zur Freigabe der Teile (T1, T2) bei Auftreten vorbestimmter Änderungen der äußeren Kräfte,
**dadurch gekennzeichnet,**
- **dass** im zweiten Teil (T2) ein mit einem Steuerelement (4) des ersten Teils (T1) und mit einer Einrast-Vorrichtung (14a, 14b) des zweiten Teils (T2) zusammenwirkendes Verriegelungselement (2a, 2b) angeordnet ist, das mittels einer Vorspann-Einrichtung (5a, 5b) von einer Verriegelungs- in eine Entriegelungsstellung beweglich ist,
- **dass** das Steuerelement (4) mittels einer Vorspann-Einrichtung (6a, 6b) von einer Verriegelungs- in eine Entriegelungsstellung beweglich ist und ein Anlageelement (12) aufweist, das mit einem ersten Anlageelement (11a, 11 b) des Verriegelungselementes (2a, 2b) derart zusammenwirkt, dass in der Verriegelungsstellung das Verriegelungselement (2a, 2b) über die Einrast-Vorrichtung (14a, 14b) mit dem ersten Teil (T1) in Eingriff gehalten und in der Entriegelungsstellung das Verriegelungselement (2a, 2b) aus der Einrast-Vorrichtung (14a, 14b) herausbewegt wird, um den ersten Teil (T1) vom zweiten Teil (T2) zu lösen.

2. Trennschloss nach dem Anspruch 1, **dadurch gekennzeichnet, dass** zwei Verriegelungselemente (2a, 2b) vorgesehen sind, die mit einem Steuerelemente (4) zusammenwirken.

3. Trennschloss nach dem Anspruch 1 oder 2, **dadurch gekennzeichnet, dass** das zumindest eine Verriegelungselement (2a, 2b) drehbar gelagert ist.

4. Trennschloss nach einem der voranstehenden Ansprüche, **dadurch gekennzeichnet, dass** das Steuerelement (4) längsverschieblich ist.

5. Trennschloss zum Zusammenhalten zweier Teile (T1, T2) einer Anordnung aus einem mit dem ersten der Teile verbundenen Schirm und einer von diesem getragenen, mit dem zweiten (T2) der Teile verbundenen Last und zur Freigabe der Teile (T1, T2),
**dadurch gekennzeichnet,**
- **dass** im zweiten Teil (T2) ein mit einem Steuerelement (4) des ersten Teils (T1) und mit einer Einrast-Vorrichtung (14a, 14b) des zweiten Teils (T2) zusammenwirkendes Verriegelungselement (2a, 2b) angeordnet ist, das mittels einer Vorspann-Einrichtung (5a, 5b) von einer Verriegelungs- in eine Entriegelungsstellung beweglich ist,
- **dass** das Steuerelement (4) mittels einer Vorspann-Einrichtung (6a, 6b) von einer Verriegelungs- in eine Entriegelungsstellung beweglich ist und ein Anlageelement (12) aufweist, das mit einem ersten Anlageelement (11a, 11 b) des Verriegelungselementes (2a, 2b) derart zusammenwirkt, dass in der Verriegelungsstellung das Verriegelungselement (2a, 2b) über die Einrast-Vorrichtung (14a, 14b) mit dem ersten Teil (T1) in Eingriff gehalten und in der Entriegelungsstellung das Verriegelungselement (2a, 2b) aus der Einrast-Vorrichtung (14a, 14b) herausbewegt wird, um den ersten Teil (T1) vom zweiten Teil (T2) zu lösen, so dass das Zusammenhalten der beiden Teile (T1, T2) durhc das Auftreten der äußeren Kräfte aufgrund einer Selbstsicherung und das Lösen derselben bei Auftreten einer Reduktion der von der Last ausgeübten Gewichtskraft erfolgt.

6. Trennschloss nach dem Anspruch 5, **dadurch gekennzeichnet, dass** zwei Verriegelungselemente (2a, 2b) vorgesehen sind, die mit einem Steuerelemente (4) zusammenwirken.

7. Trennschloss nach dem Anspruch 5 oder 6, **dadurch gekennzeichnet, dass** das zumindest eine Verriegelungselement (2a, 2b) drehbar gelagert ist.

8. Trennschloss nach einem der Ansprüche 5 bis 7, **dadurch gekennzeichnet, dass** das Steuerelement (4) längsverschieblich ist.

## Claims

1. Separating lock for holding together two parts (T1, T2) of an arrangement due to self-locking on account of external forces, and for releasing the parts (T1, T2) when predetermined changes occur in the external forces,
**characterized**
- **in that** a locking element (2a, 2b), which interacts with a control element (4) of the first part (T1) and with a latching apparatus (14a, 14b) of the second part (T2), is arranged in the second part (T2) and can be moved from a locking position to an unlocking position by means of a prestressing device (5a, 5b),
- **in that** the control element (4) can be moved from a locking position to an unlocking position by means of a prestressing device (6a, 6b) and has an abutment element (12) which interacts with a first abutment element (11a, 11b) of the locking element (2a, 2b) in such a way that the locking element (2a, 2b) is held, such that it engages with the first part (T1), by the latching apparatus (14a, 14b) in the locking position, and the locking element (2a, 2b) is moved out of the latching apparatus (14a, 14b) in the unlocking position in order to disconnect the first part (T1) from the second part (T2).

2. Separating lock according to Claim 1, **characterized in that** two locking elements (2a, 2b) are provided which interact with a control element (4).

3. Separating lock according to Claim 1 or 2, **characterized in that** the at least one locking element (2a, 2b) is mounted such that it can rotate.

4. Separating lock according to one of the preceding claims, **characterized in that** the control element (4) can be displaced in the longitudinal direction.

5. Separating lock for holding together two parts (T1, T2) of an arrangement comprising a parachute or paraglider, which is connected to the first part, and a load, which is borne by the said parachute or paraglider and is connected to the second part (T2), and for releasing the parts (T1, T2),
**characterized**
- **in that** a locking element (2a, 2b), which interacts with a control element (4) of the first part (T1) and with a latching apparatus (14a, 14b) of the second part (T2), is arranged in the second part (T2) and can be moved from a locking position to an unlocking position by means of a prestressing device (5a, 5b),
- **in that** the control element (4) can be moved from a locking position to an unlocking position by means of a prestressing device (6a, 6b) and has an abutment element (12) which interacts with a first abutment element (11a, 11b) of the locking element (2a, 2b) in such a way that the locking element (2a, 2b) is held, such that it engages with the first part (T1), by the latching apparatus (14a, 14b) in the locking position, and the locking element (2a, 2b) is moved out of the latching apparatus (14a, 14b) in the unlocking position in order to disconnect the first part (T1) from the second part (T2), so that the two parts (T1, T2) are held together by external forces occurring due to self-locking and the said parts are disconnected when the force due to the weight exerted by the load is reduced.

6. Separating lock according to Claim 5, **characterized in that** two locking elements (2a, 2b) are provided which interact with a control element (4).

7. Separating lock according to Claim 5 or 6, **characterized in that** the at least one locking element (2a, 2b) is mounted such that it can rotate.

8. Separating lock according to one of Claims 5 to 7, **characterized in that** the control element (4) can be displaced in the longitudinal direction.

## Revendications

1. Serrure séparable destinée à maintenir ensemble deux pièces (T1, T2) d'un agencement sur la base d'une fixation automatique due à des forces extérieures et à libérer les pièces (T1, T2) à l'apparition de modifications prédéterminées des forces extérieures,
**caractérisée en ce que**
- dans la deuxième partie (T2) est disposé un élément de verrouillage (2a, 2b) coopérant avec un élément de commande (4) de la première partie (T1) et avec un dispositif d'encliquetage (14a, 14b) de la deuxième partie (T2), lequel peut être déplacé au moyen d'un dispositif de précontrainte (5a, 5b) d'une position de verrouillage à une position de déverrouillage,
- l'élément de commande (4) peut être déplacé au moyen d'un dispositif de précontrainte (6a, 6b) d'une position de verrouillage à une position de déverrouillage et présente un élément d'appui (12) qui coopère avec un premier élément d'appui (11a, 11b) de l'élément de verrouillage (2a, 2b) de telle sorte que l'élément de verrouillage (2a, 2b) soit maintenu en prise avec la première partie (T1) par le biais du dispositif d'encliquetage (14a, 14b) dans la position de verrouillage, et que l'élément de verrouillage (2a, 2b) soit ressorti du dispositif d'encliquetage (14a, 14b) dans la position de déverrouillage, afin de libérer la première partie (T1) de la deuxième partie (T2).

2. Serrure séparable selon la revendication 1, **caractérisée en ce que** deux éléments de verrouillage (2a, 2b) sont prévus, lesquels coopèrent avec un élément de commande (4).

3. Serrure séparable selon la revendication 1 ou 2, **caractérisée en ce que** ledit au moins un élément de verrouillage (2a, 2b) est monté à rotation.

4. Serrure séparable selon l'une quelconque des revendications précédentes, **caractérisée en ce que** l'élément de commande (4) est déplaçable en longueur.

5. Serrure séparable destinée à maintenir ensemble deux pièces (T1, T2) d'un agencement constitué d'un écran connecté à la première des pièces et d'une charge portée par celui-ci, connectée à la deuxième (T2) des pièces, et destinée à libérer les pièces (T1, T2),
**caractérisée en ce que**
- dans la deuxième partie (T2) est disposé un élément de verrouillage (2a, 2b) coopérant avec un élément de commande (4) de la première partie (T1) et avec un dispositif d'encliquetage (14a, 14b) de la deuxième partie (T2), lequel peut être déplacé au moyen d'un dispositif de précontrainte (5a, 5b) d'une position de verrouillage à une position de déverrouillage,
- l'élément de commande (4) peut être déplacé au moyen d'un dispositif de précontrainte (6a, 6b) d'une position de verrouillage à une position de déverrouillage et présente un élément d'appui (12) qui coopère avec un premier élément d'appui (11a, 11b) de l'élément de verrouillage (2a, 2b) de telle sorte que l'élément de verrouillage (2a, 2b) soit maintenu en prise avec la première partie (T1) par le biais du dispositif d'encliquetage (14a, 14b) dans la position de verrouillage, et que l'élément de verrouillage (2a, 2b) soit ressorti du dispositif d'encliquetage (14a, 14b) dans la position de déverrouillage, afin de libérer la première partie (T1) de la deuxième partie (T2), de sorte que le maintien ensemble des deux pièces (T1, T2) se produise par l'apparition des forces extérieures sur la base d'une fixation automatique et que le desserrage de ces pièces se produise lors de l'apparition d'une réduction de la force de pesanteur exercée par la charge.

6. Serrure séparable selon la revendication 5, **caractérisée en ce que** deux éléments de verrouillage (2a, 2b) sont prévus, lesquels coopèrent avec un élément de commande (4).

7. Serrure séparable selon la revendication 5 ou 6, **caractérisée en ce que** ledit au moins un élément de verrouillage (2a, 2b) est monté à rotation.

8. Serrure séparable selon l'une quelconque des revendications 5 à 7, **caractérisée en ce que** l'élément de commande (4) est déplaçable en longueur.
